# EUROPÄISCHE PATENTANMELDUNG

(11) **EP 4 545 348 A1**
(43) Veröffentlichungstag der Anmeldung: **30.04.2025**
(21) Anmeldenummer: 24194222.6
(22) Anmeldetag: 13.08.2024
(51) Int. Cl.: B60L 53/20, B60L 53/22, B60L 53/24, H02J 7/02, H02M 1/00, H02M 7/797

(54) **TRAKTIONSNETZ FÜR EIN KRAFTFAHRZEUG**

(30) Priorität: 25.10.2023 DE 102023210505
(71) Anmelder: VOLKSWAGEN AG, 38440 Wolfsburg (DE)
(72) Erfinder: Kusch, Dr. Rüdiger, 38116 Braunschweig (DE)

(57) **Zusammenfassung**

Die Erfindung betrifft ein Traktionsnetz (1) für ein Kraftfahrzeug, umfassend mindestens eine Hochvoltbatterie (2), einen DC/DC-Wandler (11), einen Zwischenkreiskondensator (C), der aus mindestens zwei in Reihe geschalteten Kondensatoren (C1,C2) gebildet wird und einen Neutralpunkt (N) aufweist, einen Wechselrichter (3) und einen dreiphasigen AC-Ladeanschluss (6), wobei die drei AC-Ladeleitungen (L1-L3) mit einem Wechselspannungsfilter (7) verbunden sind, wobei der Wechselrichter (3) drei Halbbrücken (H1-H3) aufweist, wobei jeder Halbbrücke (H1-H3) ein monolithischer BIDFET (10) zugeordnet ist, wobei die High-Side-Transistoren der BIDFETs (10) jeweils mit einem Mittelabgriff (M) ihrer zugeordneten Halbbrücken (H1-H3) verbunden sind und die Low-Side-Transistoren der BIDFETs (10) jeweils mit dem Neutralpunkt (N) des Zwischenkreiskondensators (C) verbunden sind, wobei die drei AC-Ladeleitungen (L1-L3) mit den Mittelabgriffen (M) der Halbbrücken (H1-H3) verbunden sind.

## Beschreibung

Die Erfindung betrifft ein Traktionsnetz für ein Kraftfahrzeug.

Der typische Aufbau eines Traktionsnetzes besteht aus einer Traktionsbatterie, einem Wechselrichter und einer Elektromaschine. Dabei sind viele verschiedene Topologien bekannt, wie die einzelnen Komponenten eines solchen Traktionsnetzes aufgebaut sind. Zur Reduzierung der Ströme wird versucht, fahrzeugseitig mit möglichst hohen Spannungen zu arbeiten. Beispielsweise sind Traktionsnetze bekannt, bei denen die Nennspannung der Traktionsbatterie 800 V beträgt. Dies führt zu Problemen bei der Spannungsfestigkeit der Halbleiterschalter, sodass für derartige Traktionsnetze 3-Level-Wechselrichter vorgeschlagen worden sind, wie beispielsweise in der DE 10 2016 206 945 A1 beschrieben. Ein weiteres Problem stellt die uneinheitliche Ladeinfrastruktur dar, wo einerseits 400 v- als auch 800 V-DC-Ladesäulen vorhanden sind. Je nach verwendeter Topologie kann dabei die maximale Ladeleistung nicht voll ausgeschöpft werden oder aber der Schaltungsaufwand ist sehr hoch.

Weiter besteht häufig der Wunsch, dass auch ein Laden mit Wechselspannung möglich ist. In diesem Fall ist zwischen dem Wechselspannungsladeanschluss und der Hochvoltbatterie ein Gleichrichter angeordnet, der die Wechselspannung in eine Gleichspannung wandelt. Dabei kann zusätzlich ein DC/DC-Wandler vorgesehen sein, der die gleichgerichtete Spannung an das Spannungsniveau der Hochvoltbatterie anpasst.

Aus der DE 10 2019 106 485 A1 ist eine Weissach-Gleichrichteranordnung bekannt, die sich an verschiedene Konfigurationen auf der Wechselspannungsladeseite anpassen lässt.

Ein weiteres Traktionsnetz ist aus der US 10,562,404 B1 bekannt, das dazu ausgelegt ist, aus einer ein-, zwei- oder dreiphasigen Wechselspannungsquelle geladen zu werden.

Dabei stellt sich das technische Problem, die Traktionsnetze möglichst kompakt und mit wenig Bauteilen auszubilden.

Der Erfindung liegt das technische Problem zugrunde, ein kompakteres Traktionsnetz zu schaffen.

Die Lösung des technischen Problems ergibt sich durch ein Traktionsnetz mit den Merkmalen des Anspruchs 1. Weitere vorteilhafte Ausgestaltungen der Erfindung ergeben sich aus den Unteransprüchen.

Das Traktionsnetz für ein Kraftfahrzeug umfasst mindestens ein Hochvoltbatterie, einen DC/DC-Wandler, einen Zwischenkreiskondensator, der aus mindestens zwei in Reihe geschalteten Kondensatoren gebildet wird und einen Neutralpunkt aufweist, einen Wechselrichter und einen dreiphasigen AC-Ladeanschluss. Dabei sind die drei AC-Ladeleitungen mit einem Wechselspannungsfilter verbunden. Der Wechselrichter weist drei Halbbrücken auf, wobei jeder Halbbrücke ein monolithischer BIDFET zugeordnet ist, wobei die High-Side-Transistoren der BIDFETs jeweils mit einem Mittelabgriff ihrer zugeordneten Halbbrücke verbunden sind und die Low-Side-Transistoren der BIDFETs jeweils mit dem Neutralpunkt des Zwischenkreiskondensators verbunden sind. Weiter sind die drei AC-Ladeleitungen mit den Mittelabgriffen der Halbbrücken verbunden bzw. sind mit diesen verbindbar. Dabei können die BI DFETs in ein Modulgehäuse des Wechselrichters integriert sein, wobei diese vorzugsweise auf einer bzw. mehreren Leiterplatten der Halbbrücken angeordnet sind. Mittels der bidirektionalen FETs lässt sich ein PFC-Gleichrichter in den Wechselrichter integrieren, sodass ein separater Gleichrichter entfallen kann, wobei durch die Anordnung im Wechselrichter das Design sehr kompakt ist, was zusätzlich auch die Kühlung erleichtert. Des Weiteren ermöglichen die BIDFETs weitere Vorteile, die später noch näher beschrieben werden. Bei entsprechender bidirektionaler Auslegung des integrierten Gleichrichters ist so ein Vehicle-to-Grid, Vehicle-to-Home und ein Vehicle-to-Utiliy Laden umgesetzt, sodass das Traktionsnetz auch als mobile Ladesäule für andere Kraftfahrzeuge genutzt werden kann.

In einer Ausführungsform ist der DC/DC-Wandler als bidirektionaler Hochsetz-Tiefsetzsteller ausgebildet. Dies erlaubt einen maximalen Freiheitsgrad. So kann beispielsweise eine unterschiedliche DC-Ladeinfrastruktur (400 V oder 800 V) genutzt werden sowie eine gewünschte Spannung am Wechselrichter für einen optimalen Arbeitspunkt der Elektromaschine eingestellt werden, auch wenn die Spannung der Hochvoltbatterie stark gesunken ist. Hierdurch kann dann die Hochvoltbatterie auch aus Na/Sodium-Batteriezellen aufgebaut sein, die größere Spannungseinbrüche als Li-lonen-Batteriezellen aufweisen können.

Weiter kann der DC/DC-Wandler auch als zwei-, drei- oder mehrphasiger interleaved DC/DC-Wandler ausgebildet sein, wobei der DC/DC-Wandler auch als asymmetrisch interleaved DC/DC-Wandler ausgebildet sein kann. Der Vorteil von interleaved DC/DC-Wandlern ist, dass die Leistung aufgeteilt werden kann, sodass geringere Anforderungen die einzelnen Bauelemente gestellt werden müssen, wobei jedoch die Anzahl der Bauelemente steigt. Ein weiterer Vorteil eines asymmetrischen interleaved DC/DC-Wandlers ist, dass die Verluste im unteren Leistungsbereich reduziert werden können.

In einer alternativen Ausführungsform ist der DC/DC-Wandler als Tiefsetzsteller ausgebildet, der die höhere Spannung am Wechselrichter in die tiefere Spannung der Hochvoltbatterie abwärts wandelt. Dabei kann der Tiefsetzsteller auch bidirektional ausgebildet sein, sodass die niedrigere Spannung der Hochvoltbatterie im Fahrbetrieb hochgesetzt wird.

In einer Ausführungsform ist der DC/DC-Wandler als unidirektionaler Tiefsetzsteller ausgebildet, wobei zwischen der Hochvoltbatterie und dem Zwischenkreiskondensator mindestens eine Bypass-Leitung mit mindestens einem Schaltelement angeordnet ist, wobei im geschlossenen Zustand des oder der Schaltelemente der DC/DC-Wandler überbrückt wird. Hierdurch können Bauelemente mit geringerer Stromtragfähigkeit verwendet werden, da diese nur die Ladeströme tragen müssen, wohingegen die größeren Fahrströme über die Bypass-Leitungen geführt werden. Hierdurch werden Kosten eingespart.

In einer weiteren Ausführungsform ist eine Steuerung derart ausgebildet, im Fahrbetrieb die BIDFETs derart anzusteuern, dass ein 3-Level-Pulsmuster erzeugt wird. Hierdurch werden die Motorharmonischen an der Elektromaschine reduziert, sodass die Motorverluste reduziert werden. Die BIDFETs dienen also im Ladebetrieb als Bestandteil des Gleichrichters und im Fahrbetrieb als Bestandteil des Wechselrichters.

In einer alternativen Ausführungsform sind den Transistoren der Halbbrücken und den BIDFETs die gleichen Gate-Treiber zugeordnet, wobei eine Umschaltvorrichtung vorhanden ist, die derart ausgebildet ist, dass die Gate-Treiber im AC-Ladebetrieb den BIDFETs und im Fahrbetrieb den Transistoren der Halbbrücken zugeordnet sind. Dabei wird im AC-Ladebetrieb mittels der Freilaufdioden der Transistoren und den BIDFETs ein unidirektionaler Gleichrichter gebildet. Hierdurch können sechs Gate-Treiber eingespart werden, wobei dann aber kein Rückspeisen ins Netz oder in andere Komponenten mehr möglich ist und auch nur ein 2-Level-Pulsmuster im Fahrbetrieb eingestellt werden kann.

In einer weiteren Ausführungsform ist eine Umschaltvorrichtung vorgesehen, die derart ausgebildet ist, im AC-Ladebetrieb eine Elektromaschine von den AC-Ladeleitungen zu trennen. Hierdurch kann die Elektromaschine im AC-Ladebetrieb spannungslos geschaltet werden, sodass keine unerwünschten Antriebsmomente an der Elektromaschine erzeugt werden.

In einer weiteren Ausführungsform sind zwischen dem AC-Ladeanschluss und dem Wechselrichter ein AC-Filter (Wechselspannungsfilter) und ein aktiver Ableitstromfilter angeordnet, wobei letzterer insbesondere dem Berührschutz dient.

In einer weiteren Ausführungsform sind die BIDFETs als GaN-BIDFETs ausgebildet, die sehr verlustarm betrieben werden können.

Die Transistoren der Halbbrücken sind beispielsweise als SiC-Transistoren ausgebildet, können aber auch als GaN-Transistoren ausgebildet sein.

Die Erfindung wird nachfolgend anhand bevorzugter Ausführungsbeispiele näher erläutert. Die Figuren zeigen:
- Fig. 1: ein Traktionsnetz in einer ersten Ausführungsform,
- Fig. 2: einen alternativen Hochsetz-Tiefsetzsteller,
- Fig. 3: einen weiteren alternativen Hochsetz-Tiefsetzsteller,
- Fig. 4: ein Traktionsnetz mit einem bidirektionalen Tiefsetzsteller,
- Fig. 5: ein Traktionsnetz mit Bypass-Leitungen,
- Fig. 6: ein schematisches Blockschaltbild einer Umschaltvorrichtung,
- Fig. 7: eine Schaltungsanordnung eines bidirektionalen Vienna-Gleichrichters (Stand der Technik) und
- Fig. 8: eine Schaltungsanordnung eines unidirektionalen Vienna-Gleichrichters (Stand der Technik).

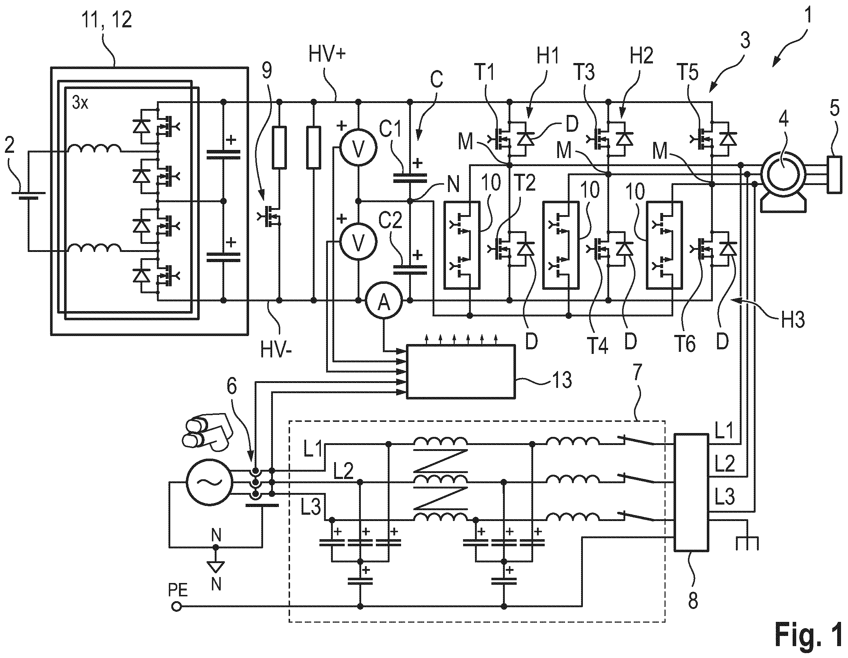

In der Fig. 1 ist ein Traktionsnetz 1 in einer ersten Ausführungsform dargestellt. Das Traktionsnetz 1 weist eine Hochvoltbatterie 2 auf, die beispielsweise eine Nennspannung von 400 V - 420 V aufweist. Weiter weist das Traktionsnetz 1 einen Zwischenkreiskondensator C auf, der aus mindestens zwei in Reihe geschalteten Kondensatoren C1, C2 gebildet wird und einen Neutralpunkt N aufweist. Weiter weist das Traktionsnetz 1 einen Wechselrichter 3 auf, an dessen Ausgang eine Elektromaschine 4 mit Getriebe 5 angeordnet ist. Das Traktionsnetz 1 weist weiter einen dreiphasigen AC-Ladeanschluss 6 auf, wobei die drei Ladeleitungen L1-L3 mit einem AC-Filter (bzw. Wechselspannungsfilter) 7 verbunden sind, hinter dem ein aktiver Ableitstromfilter 8 angeordnet ist. Die Ausgänge des Ableitstromfilters 8 sind dann mit den drei Wechselspannungsleitungen des Wechselrichters 3 verbunden. Weiter ist dargestellt, dass Spannungsmesseinrichtungen V parallel zu den Kondensatoren C1, C2 des Zwischenkreiskondensators C geschaltet sind. Weiter ist eine aktive Entladeschaltung 9 für den Zwischenkreiskondensator C dargestellt, bestehend aus einem Widerstand zwischen HV+ und HV- und einer Parallelschaltung, die aus einem weiteren Widerstand in Reihe mit einem Transistor besteht. Weiter ist eine Strommesseinrichtung A in der HV- - Leitung dargestellt. Der Wechselrichter 3 weist drei Halbbrücken H1-H3 auf, wobei den Transistoren T1-T6 jeweils eine Freilaufdiode D zugeordnet ist. Die Transistoren T1-T6 sind beispielsweise als SiC-Transistoren ausgebildet, wobei die Freilaufdioden D als intrinsische Dioden oder als separate, diskrete Dioden ausgebildet sein können. Die Halbbrücken H1-H3 weisen jeweils einen Mittelabgriff M auf, wobei die Ladeleitungen L1-L3 mit den Mittelabgriffen M verbunden sind. Weiter ist jeder Halbbrücke H1-H3 ein monolithischer BIDFET 10 zugeordnet. Der BIDFET 10 weist einen Spannungseingang und einen Spannungsausgang sowie zwei Steueranschlüsse auf. Dabei ist der High-Side-Transistor der BIDFETs 10 mit dem jeweiligen Mittelabgriff M der zugeordneten Halbbrücke H1-H3 verbunden. Die Low-Side-Transistoren der BIDFETs 10 sind mit dem Neutralpunkt N des Zwischenkreiskondensators C verbunden. Die BIDFETs 10 sind vorzugsweise als GaN-BIDFETs ausgebildet. Schließlich ist zwischen der Hochvoltbatterie 2 und dem Zwischenkreiskondensatoren C ein bidirektionaler Hochsetz-Tiefsetzsteller 12 als DC/DC-Wandler 11 angeordnet. Dabei ist durch das 3x angedeutet, dass der DC/DC-Wandler 11 als gestaggerter dreiphasiger interleaved DC/DC-Wandler 11 ausgebildet ist, der auch asymmetrisch sein kann, d.h. eine Phase ist für geringere Ströme ausgelegt als die beiden anderen Phasen. Somit kann der DC/DC-Wandler 11 bei geringeren Leistungsanforderungen mit kleineren Verlusten betrieben werden. Dabei sind die Transistoren des DC/DC-Wandlers 11 beispielsweise als SiC-Transistoren ausgebildet (mit intrinsischer Diode). Am Ausgang des DC/DC-Wandlers 11 zur Seite zum Zwischenkreiskondensator C sind zwei Glättungskondensatoren dargestellt. Schließlich ist noch eine Steuerung 13 dargestellt.

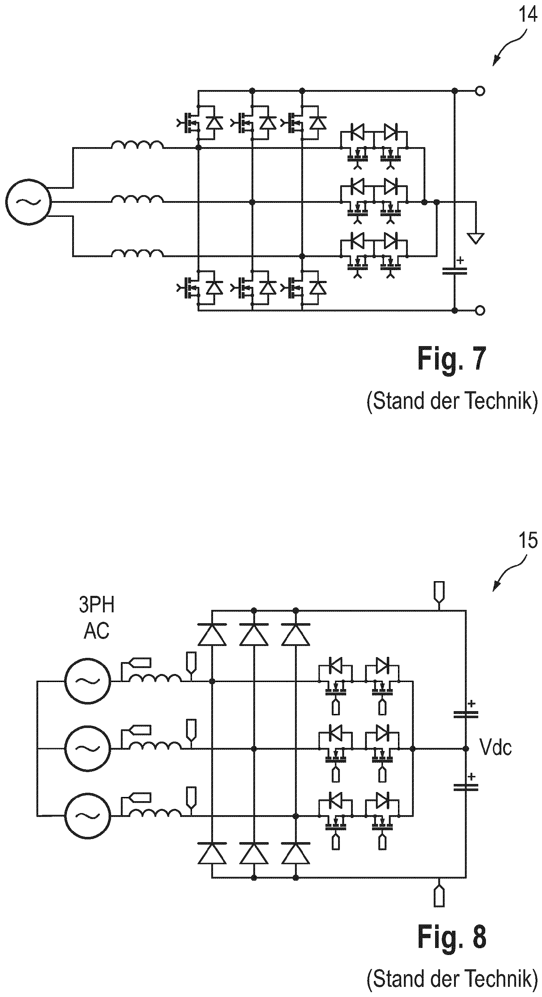

Bevor die Schaltung gemäß Fig. 1 weiter erläutert wird, wird auf Fig. 7 verwiesen, die einen bidirektionalen Vienna-Gleichrichter 14 zeigt. An den drei Wechselspannungsanschlüssen ist jeweils eine Induktivität angeordnet, die jeweils mit einem Mittelabgriff einer Halbbrücke verbunden ist. Des Weiteren ist jeder Mittelabgriff mit einer Reihenschaltung aus zwei gegensinnig zueinander verschalteten MOSFETs verbunden. Die drei Reihenschaltungen sind mit einem gemeinsamen Neutralpunkt verbunden.

Genau diese Struktur eines Vienna-Gleichrichters 14 wird nun in dem Wechselrichter 3 durch die drei BIDFETs 10 nachgebildet, sodass der Gleichrichter in den Wechselrichter 3 integriert wird, wobei bei den GaN-Transistoren die intrinsischen Dioden nicht vorhanden sind.

Im AC-Ladebetrieb steuert dann die Steuerung 13 die drei Halbbrücken H1-H3 und die drei BIDFETs 10 wie ein Gleichrichter an und über den DC/DC-Wandler 11 wird die Hochvoltbatterie 2 geladen. Da der Gleichrichter bidirektional ist, kann auch Leistung aus der Hochvoltbatterie 2 ins Netz zurückgespeist werden.

Im Fahrbetrieb können dann die drei Halbbrücken H1-H3 und die drei BIDFETs 10 derart von der Steuerung 13 angesteuert werden, dass diese ein 3L-Pulsmuster erzeugen.

Die BIDFETs 10 sind in dem Wechselrichter 3 voll integriert. Sind beispielsweise alle drei Halbbrücken H1-H3 auf einer Leiterplatte angeordnet, so sind vorzugsweise die BIDFETs 10 auch auf die Leiterplatte integriert. Bei mehreren Leiterplatten für die Halbbrücken H1-H3 sind die BIDFETs 10 vorzugsweise auf der Leiterplatte der zugeordneten Halbbrücke H1-H3 angeordnet. Dies erlaubt ein sehr kompaktes Design und vereinfacht die Kühlung.

Ist eine Rückspeisung ins Netz entbehrlich, so muss der Gleichrichter nicht bidirektional sein, sondern kann als unidirektionaler Vienna-Gleichrichter 15 ausgebildet sein, wie in Fig. 8 dargestellt. Wie man erkennt, sind statt der drei Halbbrücken aus Fig. 7 mit Transistoren drei Halbbrücken aus Dioden dargestellt. Die Verschaltung entspricht dabei den Freilaufdioden D der Halbbrücken H1-H3 des Wechselrichters 3, wobei die drei Reihenschaltungen mit den gegeneinander verpolten Transistoren aus Fig. 8 wieder den BIDFETs 10 entspricht. Daher werden die Transistoren T1-T6 für das AC-Laden nicht benötigt.

Daher kann alternativ vorgesehen sein, den Transistoren T1-T6 die gleichen Gate-Treiber zuzuordnen wie den BIDFETs 10, wobei im AC-Ladebetrieb die Gate-Treiber mit den BIDFETs 10 verbunden werden und im Fahrbetrieb mit den Transistoren T1-T6 , sodass nur ein 2-Level-Pulsmuster möglich ist. Die dazugehörige Umschalteinrichtung für die Gate-Treiber ist dabei nicht dargestellt, wird aber von der Steuerung 13 angesteuert.

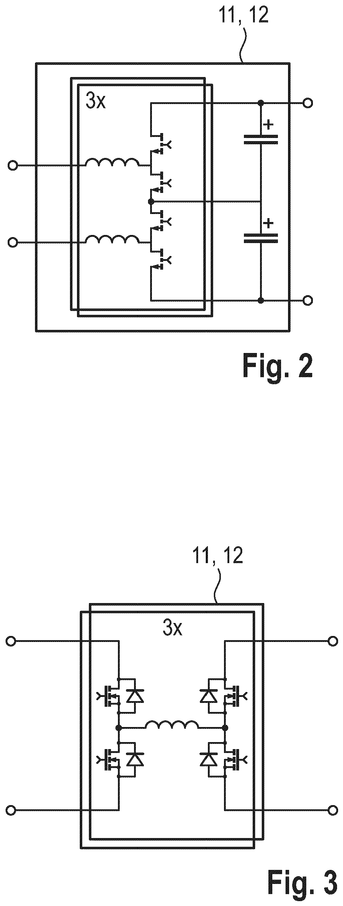

In der Fig. 2 ist eine alternative Ausführungsform für den DC/DC-Wandler 11 als Hochsetz-Tiefsetzsteller 12 dargestellt, wobei die Transistoren als GaN-Transistoren ausgebildet sind, die weniger Schaltverluste als SiC-Transistoren aufweisen.

In der Fig. 3 ist eine weitere alternative Ausführungsform dargestellt, die eine Induktivität weniger hat, sodass bei einem 3-Phasen interleaved DC/DC-Wandler 11 drei Induktivitäten eingespart werden.

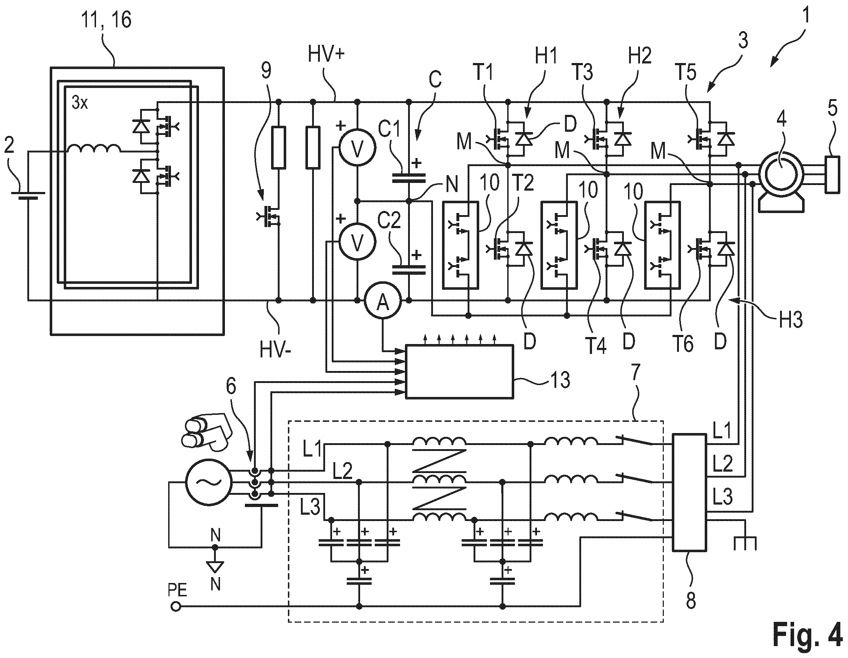

In der Fig. 4 ist ein alternatives Traktionsnetz 1 dargestellt, wobei der einzige Unterschied zum Traktionsnetz 1 gemäß Fig. 1 die Ausbildung des DC/DC-Wandlers 11 ist. Im Gegensatz zu Fig. 1 ist der DC/DC-Wandler 11 als bidirektionaler Tiefsetzsteller 16 ausgebildet, wobei dabei davon ausgegangen wird, dass die Spannungen am Wechselrichter 3 bzw. am Zwischenkreiskondensator immer höher ist als die Spannung der Hochvoltbatterie 2.

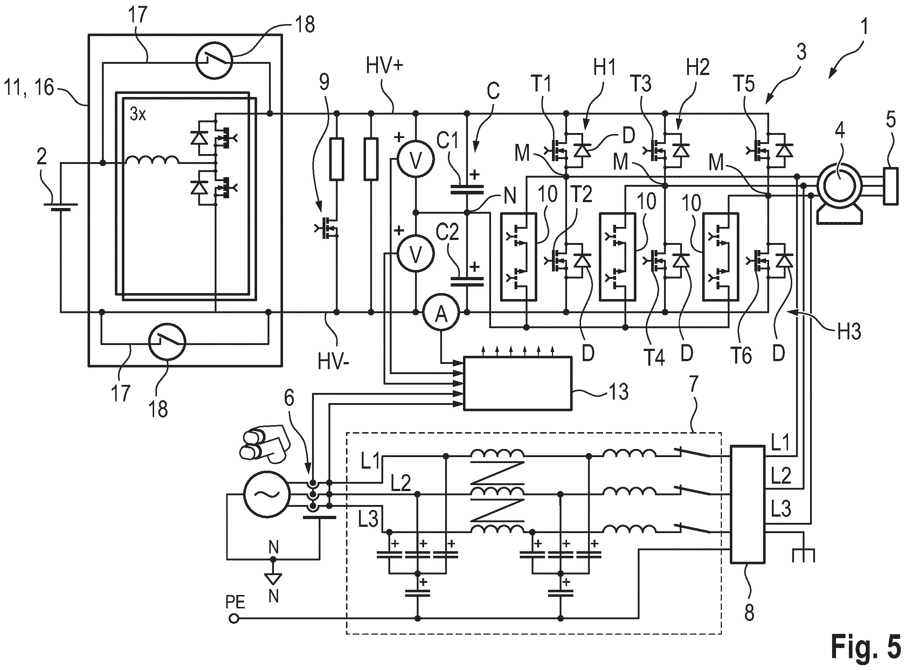

In der Fig. 5 ist ein weiteres Traktionsnetz 1 dargestellt, das ähnlich zu dem Traktionsnetz 1 gemäß Fig. 4 ist. Der einzige Unterschied ist, dass zwischen der Hochvoltbatterie 2 und dem Zwischenkreiskondensator C sowohl von der +Seite als auch von der -Seite eine Bypass-Leitung 17 mit mindestens einem Schaltelement 18 angeordnet ist, wobei im geschlossenen Zustand der Schaltelemente 18 der DC/DC-Wandler 11 überbrückt wird. Dabei sind die Schaltelemente 18 im Fahrbetrieb geschlossen und im AC-Ladebetrieb offen, sodass im AC-Ladebetrieb die Transistoren im DC/DC-Wandler 11 auf die geringeren Ströme im AC.-Ladebetrieb ausgelegt sind. Im Fahrbetrieb mit den höheren Strömen wird der DC/DC-Wandler 11 dann deaktiviert und über die Bypass-Leitungen 17 überbrückt, wobei die Ansteuerung der Schaltelemente 18 wieder über die Steuerung 13 erfolgt. Hierdurch können Kosten gespart werden. Prinzipiell ist dabei eine Bypass-Leitung 17 mit Schaltelement 18 ausreichend.

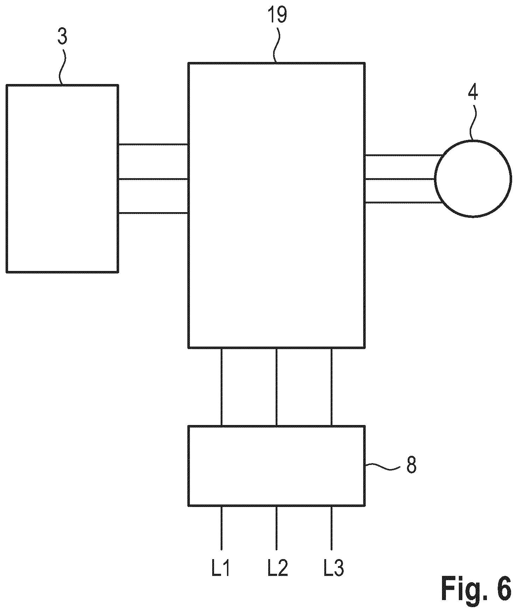

In der Fig. 6 ist eine Umschalteinrichtung 19 dargestellt, die von der Steuerung 13 angesteuert wird. Mittels der Umschaltvorrichtung 19, die von der Steuerung 13 angesteuert wird, werden die AC-Ladeleitungen L1-L3 im AC-Ladebetrieb mit dem Wechselrichter 3 verbunden, wobei die Elektromaschine 4 abgetrennt wird. Im Fahrbetrieb werden hingegen die AC-Ladeleitungen L1-L3 getrennt und der Wechselrichter 3 mit der Elektromaschine 4 verbunden.

### Bezugszeichenliste

- 1: Traktionsnetz
- 2: Hochvoltbatterie
- 3: Wechselrichter
- 4: Elektromaschine
- 5: Getriebe
- 6: Ladeanschluss
- 7: AC-Filter (Wechselspannungsfilter)
- 8: Ableitstromfilter
- 9: Entladeschaltung
- 10: BIDFET
- 11: DC/DC-Wandler
- 12: bidirektionaler Hochsetz-Tiefsetzsteller
- 13: Steuerung
- 14: bidirektionale Vienna-Gleichrichter
- 15: unidirektionale Vienna-Gleichrichter
- 16: bidirektionaler Tiefsetzsteller
- 17: Bypass-Leitung
- 18: Schaltelement
- 19: Umschaltvorrichtung
- M: Mittelabgriff
- N: Neutralpunkt
- C: Zwischenkreiskondensator
- C1,C2: Kondensatoren
- L1-L3: Ladeleitungen
- H1-H3: Halbbrücken
- T1-T6: Transistoren
- D: Freilaufdiode
- V: Spannungsmesseinrichtung
- A: Strommesseinrichtung

## Patentansprüche

1. Traktionsnetz (1) für ein Kraftfahrzeug, umfassend mindestens eine Hochvoltbatterie (2), einen DC/DC-Wandler (11), einen Zwischenkreiskondensator (C), der aus mindestens zwei in Reihe geschalteten Kondensatoren (C1,C2) gebildet wird und einen Neutralpunkt (N) aufweist, einen Wechselrichter (3) und einen dreiphasigen AC-Ladeanschluss (6), wobei die drei AC-Ladeleitungen (L1-L3) mit einem Wechselspannungsfilter (7) verbunden sind, wobei der Wechselrichter (3) drei Halbbrücken (H1-H3) aufweist, wobei jeder Halbbrücke (H1-H3) ein monolithischer BIDFET (10) zugeordnet ist, wobei die High-Side-Transistoren der BIDFETs (10) jeweils mit einem Mittelabgriff (M) ihrer zugeordneten Halbbrücken (H1-H3) verbunden sind und die Low-Side-Transistoren der BIDFETs (10) jeweils mit dem Neutralpunkt (N) des Zwischenkreiskondensators (C) verbunden sind, wobei die drei AC-Ladeleitungen (L1-L3) mit den Mittelabgriffen (M) der Halbbrücken (H1-H3) verbunden sind.

2. Traktionsnetz nach Anspruch 1, **dadurch gekennzeichnet, dass** der DC/DC-Wandler (11) als bidirektionaler Hochsetz-Tiefsetzsteller (12) ausgebildet ist.

3. Traktionsnetz nach Anspruch 1, **dadurch gekennzeichnet, dass** der DC/DC-Wandler (11) als Tiefsetzsteller (16) ausgebildet ist.

4. Traktionsnetz nach Anspruch 3, **dadurch gekennzeichnet, dass** zwischen der Hochvoltbatterie (2) und dem Zwischenkreiskondensator (C) mindestes eine Bypass-Leitung (17) mit mindestens einem Schaltelement (18) angeordnet ist, wobei im geschlossenen Zustand der Schaltelemente (18) der DC/DC-Wandler (11) überbrückt wird.

5. Traktionsnetz nach einem der vorangegangenen Ansprüche, **dadurch gekennzeichnet, dass** eine Steuerung (13) derart ausgebildet ist, im Fahrbetrieb die BIDFETs (10) derart anzusteuern, dass ein 3-Level-Pulsmuster erzeugt wird.

6. Traktionsnetz nach einem der Ansprüche 1 bis 5, **dadurch gekennzeichnet, dass** den Transistoren (T1-T6) der Halbbrücken (H1-H3) und den BIDFETs (10) die gleichen Gate-Treiber zugeordnet sind, wobei eine Umschaltvorrichtung vorhanden ist, die derart ausgebildet ist, dass die Gate-Treiber im AC-Ladebetrieb den BIDFETs (10) und im Fahrbetrieb den Transistoren (T1-T6) der Halbbrücken (H1-H3) zugeordnet werden.

7. Traktionsnetz nach einem der vorangegangenen Ansprüche, **dadurch gekennzeichnet, dass** eine Umschaltvorrichtung (19) vorgesehen ist, die derart ausgebildet ist, im AC-Ladebetrieb eine Elektromaschine (4) von den AC-Ladeleitungen (L1-L3) zu trennen.

8. Traktionsnetz nach einem der vorangegangenen Ansprüche, **dadurch gekennzeichnet, dass** zwischen dem AC-Ladeanschluss (6) und dem Wechselrichter (3) ein Wechselspannungsfilter (7) und ein aktiver Ableitstromfilter (8) angeordnet sind.

9. Traktionsnetz nach einem der vorangegangenen Ansprüche, **dadurch gekennzeichnet, dass** die BIDFETs (10) als GaN-BIDFETs ausgebildet sind.
